# EUROPEAN PATENT SPECIFICATION

(11) **EP 3 994 403 B1**
(45) Date of publication and mention of the grant of the patent: **27.09.2023**
(21) Application number: 20747165.7
(22) Date of filing: 29.05.2020
(51) Int. Cl.: F27B 3/04, C21D 9/56, F27B 9/30, F27D 99/00

(54) **SEALING ASSEMBLY AND REFLOW SOLDERING FURNACE HAVING THE SAME**
DICHTUNGSANORDNUNG UND RÜCKFLUSSLÖTOFEN DAMIT
ENSEMBLE D'ÉTANCHÉITÉ ET FOUR DE BRASAGE À REFUSION DOTÉ DE CELUI-CI

(30) Priority: 05.07.2019 CN 201910605063; 05.07.2019 CN 201921058909 U
(43) Date of publication of application: 11.05.2022
(73) Proprietor: Illinois Tool Works Inc., Glenview, IL 60025 (US)
(72) Inventor: WANG, Yuwei, Glenview, Illinois 60025 (US)
(74) Representative: HGF
(86) International application number: PCT/US2020/035334
(87) International publication number: WO 2021/006968

(56) References cited:
- EP-A1- 0 472 146
- WO-A1-2009/125794
- JP-A- 2011 054 912
- US-A1- 2015 233 641
- US-A1- 2017 051 831

## Description

### RELATED APPLICATIONS

This international application claims priority to Chinese Patent Application No. 201910605063.2, filed July 5, 2019," and to Chinese Patent Application No. 201921058909.7, filed July 5, 2019.

### TECHNICAL FIELD

The present application relates to the technical field of sealing assemblies, in particular to a sealing assembly for a reflow oven.

### BACKGROUND ART

Reflow ovens are commonly used to realize printed circuit board (PCB) surface soldering processes. During soldering of a printed circuit board (PCB), a high temperature must be maintained in a partial region inside the reflow oven, and the reflow oven must generally be filled with an inert gas as a protective gas. To ensure a heating temperature in the reflow oven and prevent the inert gas from escaping from the reflow oven, the reflow oven is often provided with a sealing strip between an upper hearth and a lower hearth. The sealing strip must not only bear the weight of the upper hearth but also withstand high temperatures in the reflow oven, and therefore ages readily, requiring prompt replacement. Patent documents US 2015/233641 A1, EP 0 472 146 A1, US 2017/051831 and JP 2011 054912 A disclose a sealing assembly composed of a support part and a sealing part.

### SUMMARY

An object of the present application is to provide an improved sealing assembly, which can not only facilitate the installation and replacement of a sealing strip, but also extend the service life of the sealing strip.

In order to achieve the abovementioned object, a first aspect of the present application is the provision of a sealing assembly for installation sealing between upper and lower hearths of a reflow oven, as disclosed in appended claims 1-11.

In the sealing assembly described above, multiple synapses are provided in a spaced-apart fashion at the top of the sealing part, each of the multiple synapses extending in the length direction of the sealing part, and the sealing part being formed integrally with the multiple synapses.

A second aspect of the present application is the provision of a reflow oven, the reflow oven comprising an upper hearth, a lower hearth, a first sealing assembly and a second sealing assembly as dislosed in appended claims 12-14.

In the sealing assembly of the present application, the mounting seat is disposed below a sealing strip; the mounting seat can be fixed to a housing of the reflow oven, and the sealing strip can thus be removably mounted on the mounting seat by elastic squeezing. This arrangement enables quick mounting and removal of the sealing strip, greatly facilitating the replacement and renewal of the sealing strip. In the present application, furthermore, the sealing part and the support part are both provided in the sealing strip; the support part can bear most of the pressure from the upper hearth, thereby greatly reducing pressure on the sealing part. In addition, in the present application, the support part is mounted at the side close to the hearth of the reflow oven, thereby preventing thermal radiation from the interior of the reflow oven from acting on the sealing part, and impeding corrosion of the sealing part by flux from the interior of the reflow oven. Thus, the sealing strip of the present application helps to delay aging and extend the service life.

### BRIEF DESCRIPTION OF THE DRAWINGS

Fig. 1A is a three-dimensional drawing of a reflow oven 100 in an embodiment of the present application.
Fig. 1B is an enlarged drawing of the reflow oven 100 shown in fig. 1A at position A.
Fig. 2 is a three-dimensional drawing of a first sealing assembly 104.1 shown in fig. 1A.
Fig. 3 is an exploded drawing of the first sealing assembly 104.1 shown in fig. 2.
Fig. 4 is a sectional view along line B-B of the first sealing assembly 104.1 shown in fig. 2.

### DETAILED DESCRIPTION

Various particular embodiments of the present application are described below with reference to the accompanying drawings, which form part of this Description. It should be understood that although terms indicating direction, such as "front", "rear", "up", "down", "left" and "right", etc., are used in the present application to describe various demonstrative structural parts and elements of the present application, these terms are used here purely in order to facilitate explanation, and are determined on the basis of demonstrative orientations shown in the drawings. Since the embodiments disclosed in the present application may be arranged in accordance with different directions, these terms indicating direction are purely illustrative, and should not be regarded as limiting.

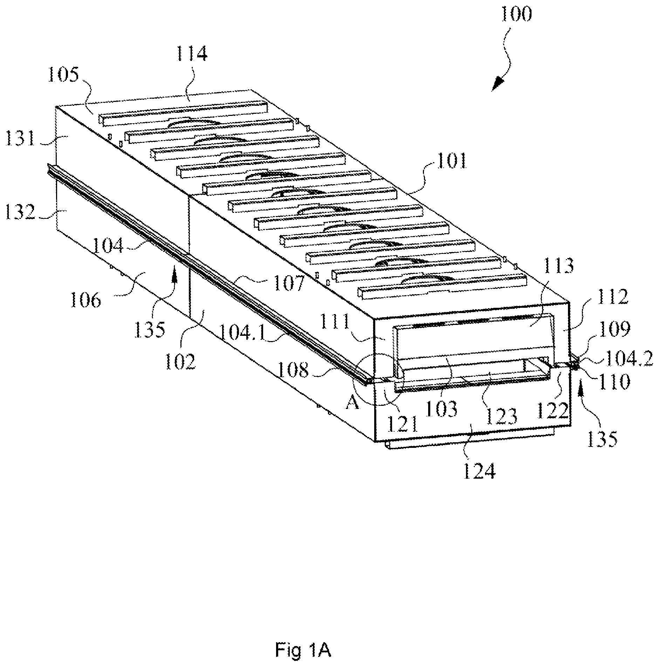

Fig. 1A is a three-dimensional drawing of a reflow oven 100 in an embodiment of the present application. As shown in fig. 1A, the reflow oven 100 is substantially a cuboid, and comprises an upper hearth 101 and a lower hearth 102. The upper hearth 101 comprises an upper hearth housing 105; an accommodating space for accommodating an upper hearth heating device is provided in the upper hearth housing 105. The lower hearth 102 comprises a lower hearth housing 106; an accommodating space is also provided in the lower hearth housing 106, for accommodating a lower hearth heating device.

The length directions of the upper hearth 101 and the lower hearth 102 are both the same as the length direction of the reflow oven 100, and the upper hearth 101 is located above the lower hearth 102, the two hearths being arranged opposite one another. When operations such as cleaning and maintenance need to be performed on the reflow oven 100, the upper hearth 101 can be removed from the top of the lower hearth 102. The upper hearth housing 105 comprises a top part 114, a first upper side part 111 and a second upper side part 112; the first upper side part 111 and the second upper side part 112 extend downward from two sides of the top part 114 respectively, such that the upper hearth 101 forms an upper hearth accommodating space 113. The lower hearth housing 106 comprises a bottom part 124, a first lower side part 121 and a second lower side part 122; the first lower side part 121 and the second lower side part 122 extend upward from two sides of the bottom part 124 respectively, such that the lower hearth 102 forms a lower hearth accommodating space 123. When the upper heath 101 is placed on top of the lower hearth 102, the first upper side part 111 and first lower side part 121 are arranged opposite one another, with the first upper side part 111 being located above the first lower side part 121, and the second upper side part 112 and second lower side part 122 are arranged opposite one another, with the second upper side part 112 being located above the second lower side part 122. The arrangement designed above results in the upper hearth accommodating space 113 and the lower hearth accommodating space 123 merging together to form a hearth accommodating space 103. The hearth accommodating space 103 runs through the entire reflow oven 100 in the length direction thereof, and is used to accommodate a printed circuit board (PCB) to be soldered and a transmission apparatus for bearing and transmitting the printed circuit board (PCB).

The upper hearth 101 comprises two upper side edges, which are arranged opposite one another in the width direction of the upper hearth 101, and extend in the length direction of the upper hearth 101; the lower hearth 102 comprises two lower side edges, which are arranged opposite one another in the width direction of the lower hearth 102, and extend in the length direction of the lower hearth 102. The reflow oven 100 is provided with side edge mounting parts 135 at two side edge positions in the width direction thereof respectively; the two side edge mounting parts 135 are arranged opposite one another, and both extend in the length direction of the reflow oven 100. One side edge mounting part 135 is located at a position where the first upper side part 111 and first lower side part 121 are mounted opposite one another; the other side edge mounting part 135 is located at a position where the second upper side part 112 and second lower side part 122 are mounted opposite one another. That is to say, each side edge mounting part 135 is located at a position where the upper hearth 101 and lower hearth 102 are mounted opposite one another. The two side edge mounting parts 135 are used to mount two sealing assemblies 104 respectively. The two sealing assemblies 104 comprise a first sealing assembly 104.1 and a second sealing assembly 104.2. The first sealing assembly 104.1 and the second sealing assembly 104.2 are disposed between the upper hearth 101 and the lower hearth 102, and both extend in the length direction of the reflow oven 100. The first sealing assembly 104.1 and the second sealing assembly 104.2 are arranged symmetrically in the width direction of the reflow oven 100, and are configured to perform a sealing action on two sides in the width direction of the hearth accommodating space 103. The first sealing assembly 104.1 is used for sealing between the first upper side part 111 and the first lower side part 121; the second sealing assembly 104.2 is used for sealing between the second upper side part 112 and the second lower side part 122.

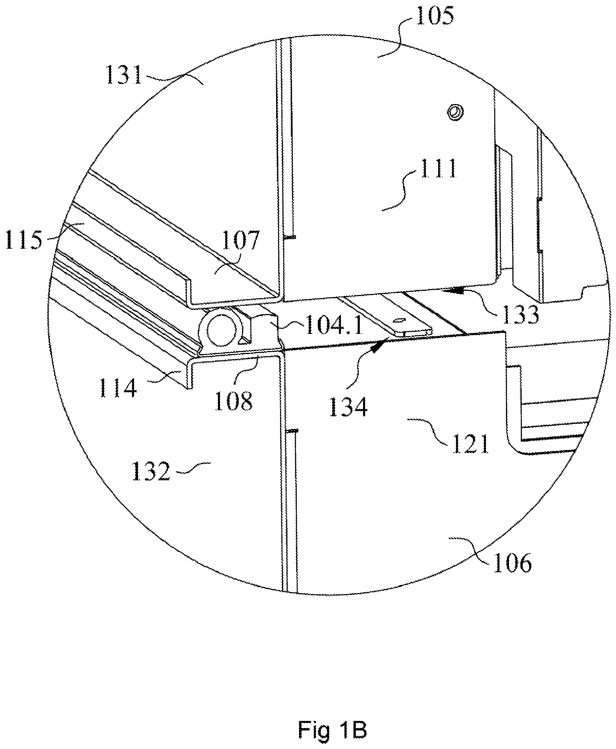

Fig. 1B is an enlarged drawing of the reflow oven 100 shown in fig. 1A at position A. This embodiment uses a hearth connection member as the side edge mounting part 135, for fixing the sealing assembly 104. As shown in fig. 1B, the hearth connection member comprises a first upper hearth connection member 107 and a first lower hearth connection member 108. The first upper hearth connection member 107 and the first lower hearth connection member 108 are platforms which extend outward from lateral edges of the upper hearth housing 105 and the lower hearth housing 106 respectively, and are used for fixing the first sealing assembly 104.1. The first upper hearth connection member 107 is disposed at a left side of the upper hearth housing 105; the first lower hearth connection member 108 is disposed at a left side of the lower hearth housing 106. It can be seen by referring to fig. 1A that a second upper hearth connection member 109 and a second lower hearth connection member 110 are provided at a right side of the upper hearth housing 105 and the lower hearth housing 106 respectively, and are used for fixing the second sealing assembly 104.2. The first upper hearth connection member 107 and the second upper hearth connection member 109 are arranged symmetrically at the left and right sides of the upper hearth 101; the first lower hearth connection member 108 and the second lower hearth connection member 110 are arranged symmetrically at the left and right sides of the lower hearth 102. The first sealing assembly 104.1 and the second sealing assembly 104.2 have exactly the same structures and are mounted in exactly the same way, and the two sealing assemblies 104 are arranged symmetrically at two sides in the width direction of the reflow oven 100; for these reasons, in the present application, only the first sealing assembly 104.1 located at the left side of the reflow oven 100 is taken as an example to describe the specific structure of the sealing assembly 104, and the manner of installation of the first upper hearth connection member 107 and the first lower hearth connection member 108 is used.

As shown in figs. 1A and 1B, the first upper hearth connection member 107 and the first lower hearth connection member 108 both take the form of long strips, and both extend in the length direction of the reflow oven 100. The first upper hearth connection member 107 is disposed above the first lower hearth connection member 108, and the two hearth connection members are arranged symmetrically with respect to each other. The first sealing assembly 104.1 is disposed between the first upper hearth connection member 107 and the first lower hearth connection member 108. An outer surface located at the left side of the upper hearth housing 105 is defined as a first upper sidewall 131; the length direction of the first upper sidewall 131 is the same as the length direction of the upper hearth housing 105. As shown in fig. 1B, the first upper hearth connection member 107 is disposed at the bottom of the first upper sidewall 131, and one end in the width direction of the first upper hearth connection member 107 is connected to a bottom edge of the first upper sidewall 131. The first upper hearth connection member 107 extends outward from the bottom edge of the first upper sidewall 131, such that a bottom face of the first upper hearth connection member 107 and a bottom face 133 of the first upper side part 111 substantially lie in the same plane. The first upper hearth connection member 107 extends to the outside by a certain distance along the plane of the bottom face 133 of the first upper side part 111, and then forms an upper folded edge 115 in an upward direction, such that the upper folded edge 115 is substantially parallel to the first upper side wall 131. The formation of the upper folded edge 115 helps to enhance the structural stability of the first upper hearth connection member 107.

Similarly, an outer surface located at the left side of the lower hearth housing 106 is defined as a first lower sidewall 132; the length direction of the first lower sidewall 132 is the same as the length direction of the lower hearth housing 106. The first lower hearth connection member 108 is disposed at the top of the first lower sidewall 132, and one end in the width direction of the first lower hearth connection member 108 is connected to a top edge of the first lower sidewall 132. The first lower hearth connection member 108 extends outward from the top edge of the first lower sidewall 132, such that a top face of the first lower hearth connection member 108 and a top face 134 of the first lower side part 121 substantially lie in the same plane. The first lower hearth connection member 108 extends to the outside by a certain distance along the plane of the top face 134 of the first lower side part 121, and then forms a lower folded edge 114 in a downward direction, such that the lower folded edge 114 is substantially parallel to the first lower side wall 132. The formation of the lower folded edge 114 helps to enhance the structural stability of the first lower hearth connection member 108.

In this embodiment, the first upper hearth connection member 107 is formed integrally with the first upper sidewall 131, and the first lower hearth connection member 108 is formed integrally with the first lower sidewall 132. In other embodiments, the first upper hearth connection member 107 and the first upper sidewall 131 may be provided as separate parts, and the first lower hearth connection member 108 and the first lower sidewall 132 may be provided as separate parts. For example, the first upper hearth connection member 107 is fixed to the first upper sidewall 131 by welding, or by a method of fastening such as screws or bolts, and the first lower hearth connection member 108 is fixed to the first lower sidewall 132 by welding, or by a method of fastening such as screws or bolts.

This embodiment uses the hearth connection members (the first upper hearth connection member 107 and first lower hearth connection member 108, and the second upper hearth connection member 109 and second lower hearth connection member 110) as the side edge mounting parts 135 to fix the sealing assemblies 104. The configuration of the side edge mounting parts 135 enables the sealing assemblies 104 to be as far away as possible from the hearths of the reflow oven 100, so that high temperatures in the hearths and flux from the printed circuit board (PCB) affect the sealing assemblies to a lesser degree, thereby increasing the service life of the sealing assemblies 104. In other embodiments, a lower end body of the upper hearth 101 and an upper end body of the lower hearth 102 may also be used directly as the side edge mounting parts 135 to fix the sealing assemblies 104. Specifically, the first sealing assembly 104.1 may be fixed directly between the first upper side part 111 of the upper hearth 101 and the first lower side part 121 of the lower hearth 102, and the second sealing assembly 104.2 may be fixed directly between the second upper side part 112 of the upper hearth 101 and the second lower side part 122 of the lower hearth 102. The two seals 104 are arranged symmetrically with respect to each other at the left and right sides of the reflow oven 100, for the purpose of sealing the left and right sides of the reflow oven 100 respectively. Taking the first sealing assembly 104.1 at the left side of the reflow oven 100 as an example, in this case, a top end of the first sealing assembly 104.1 abuts the bottom face 133 of the first upper side part 111, and a bottom end of the first sealing assembly 104.1 is fixed to the top face 134 of the first upper side part 121; it is thereby possible to accomplish sealing of the left side of the reflow oven 100.

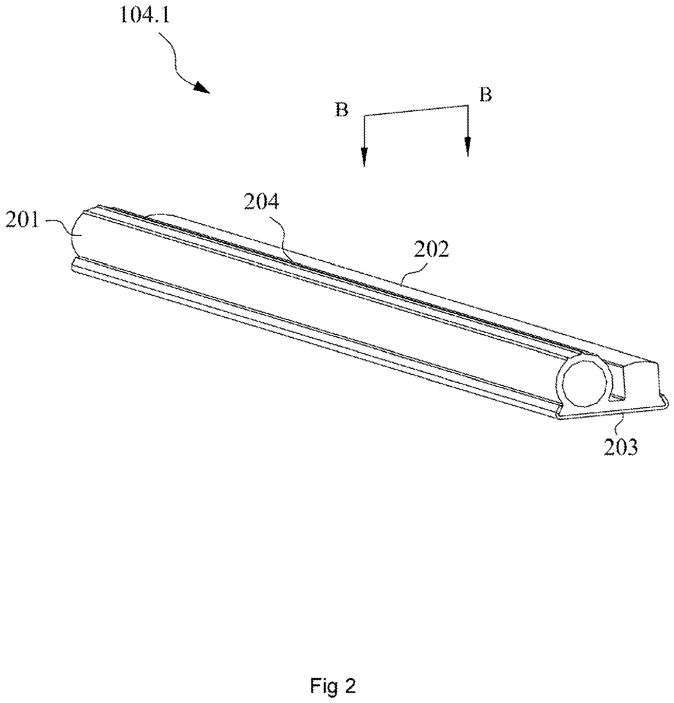

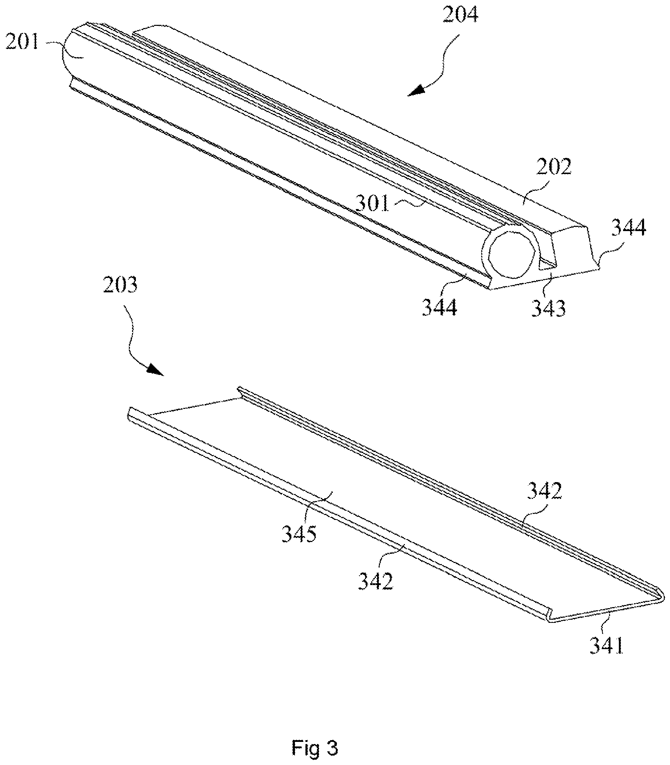

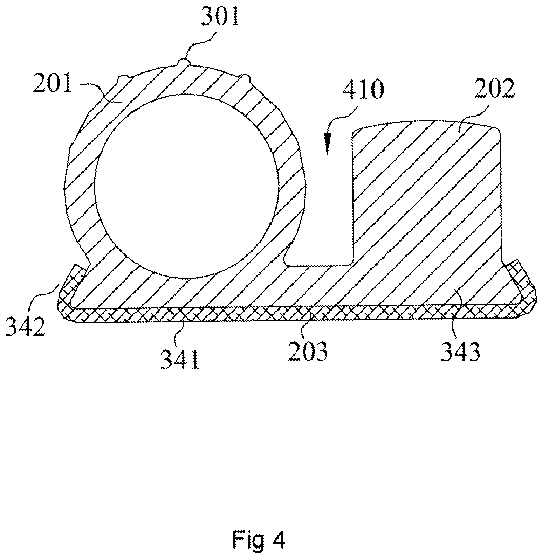

Fig. 2 is a three-dimensional drawing of the first sealing assembly 104.1 shown in fig. 1A; fig. 3 is an exploded drawing of the first sealing assembly 104.1 shown in fig. 2; fig. 4 is a sectional view along line B-B of the first sealing assembly 104.1 shown in fig. 2. Since the two sealing assemblies 104 are structurally identical, in the present application the first sealing assembly 104.1 disposed at the left side of the reflow oven 100 is taken as an example to describe the structure of the sealing assembly 104. As shown in figs. 2 and 3, the sealing assembly 104 takes the form of a long strip, and comprises a sealing strip 204 and a mounting seat 203, the mounting seat 203 being located at the bottom of the sealing strip 204. The sealing strip 204 and the mounting seat 203 both take the form of long strips, and the respective length directions thereof are both the same as the length direction of the sealing assembly 104. The sealing strip 204 is made of an elastic material; the mounting seat 203 is made of a metal material. Furthermore, in other embodiments, the mounting seat 203 may also be made of another material of high hardness and having good heat resistance.

It can be seen with reference to fig. 1B that when the sealing assembly 104 is mounted between the upper hearth housing 105 and lower hearth housing 106 of the reflow oven 100, the mounting seat 203 is mounted on an upper surface of the first lower hearth connection member 108, and the top of the sealing strip 204 is in contact with a lower surface of the first upper hearth connection member 107, thereby realizing sealed mounting of the left side of the reflow oven 100. The mounting seat 203 may be connected to the first lower hearth connection member 108 by welding, or by screw or bolt fixing, etc. In other embodiments, the mounting seat 203 may also be mounted on the lower surface of the first upper hearth connection member 107, in which case the side of the sealing strip 204 which is remote from the mounting seat 203 is in contact with the upper surface of the first lower hearth connection member 108; this arrangement is likewise able to realize sealed mounting of the side part of the reflow oven 100.

The sealing strip 204 comprises a support part 202 and a sealing part 201; the support part 202 and the sealing part 201 both take the form of long strips, and the sealing part 201 is located at one side in the width direction of the support part 202; the two parts are arranged side by side, and extend in the same direction. The support part 202 is a solid body; this design can make it easier for the support part 202 to bear downward pressure from the upper hearth 101. The sealing part 201 has a hollow structure; this design enables the sealing part 201 to undergo considerable deformation when subjected to pressure, helping an upper end of the sealing part 201 to tightly abut the lower surface of the first upper hearth connection member 107, and thereby realizing sealing between the upper hearth housing 105 and the lower hearth housing 106. In this embodiment, the support part 202 and the sealing part 201 are both made of silicone rubber. In other embodiments, the support part 202 and the sealing part 201 may also be made separately from different materials.

It can be seen with reference to fig. 1B that the support part 202 is disposed at the side close to the hearth accommodating space 103 of the reflow oven 100, and the sealing part 201 is disposed at the side remote from the hearth accommodating space 103 of the reflow oven 100. Under operating conditions of the reflow oven 100, the hearth accommodating space 103 is a high-temperature environment, and is diffused with flux from the printed circuit board (PCB). However, the high-temperature environment readily causes aging of the seal 204, and the flux will have a corrosive effect on the seal 204. In the present application, the support part 202 is provided at a position of the sealing part 201 close to the hearth accommodating space 103; in this arrangement, thermal radiation acting on the sealing part 201 is weakened due to the blocking action of the support part 202, and aging of the sealing part 201 is thereby slowed down. At the same time, the sealing part 201 does not come into direct contact with flux, so corrosion of the sealing part 201 by flux is impeded, and the service life of the sealing part 201 is thereby extended. That is to say, when the sealing assembly 104 is mounted in the reflow oven 100, the support part 202 in the sealing assembly 104 is disposed at the side close to the hearth accommodating space 103 of the reflow oven 100, and the sealing part 201 is disposed at the side remote from the hearth accommodating space 103, thereby helping to extend the service life of the sealing assembly 104.

In the case of the first sealing assembly 104.1 disposed at the left side of the reflow oven 100, the support part 202 is located at the right side of the sealing part 201. Since the two sealing assemblies 104 are arranged symmetrically at the left and right sides of the reflow oven 100, in the case of the second sealing assembly 104.2 disposed at the right side of the reflow oven 100, the support part 202 thereof is located at the left side of the sealing part 201. In the arrangement described above, the support parts 202 in the two sealing assemblies 104 are both located at the side close to the hearth accommodating space 103 of the reflow oven 100 in each case, and the sealing parts 201 are both located at the side remote from the hearth accommodating space 103 in each case, thus achieving the effect of extending the service life of the sealing assemblies 104.

As shown in figs. 3 and 4, the support part 202 has a substantially rectangular cross section; an upper surface of the support part 202 is arched upward slightly to form a curved surface; the curved surface design helps to increase the area of contact between the upper surface of the support part 202 and the lower surface of the first upper hearth connection member 107.

The sealing part 201 has a substantially circularly annular cross section, and three ribs 301 are provided at the top of the sealing part 201; the three ribs 301 extend in the length direction of the sealing part 201, and are spaced apart in the width direction of the sealing part 201. The ribs 301 protrude upward slightly relative to an upper surface of the circular ring of the sealing part 201, and are formed integrally with the circularly annular sealing part 201. The ribs 301 help to form linear sealing between the top of the sealing part 201 and the lower surface of the first upper hearth connection member 107, thereby helping to improve the sealing performance of the sealing part 201. In other embodiments, the number of ribs 301 may also be another suitable number, e.g. one, two or four, etc.

In other embodiments, the cross section of the sealing part 201 may also be another shape, e.g. rectangularly annular or "W"-shaped, etc., as long as it can undergo significant deformation to achieve a sealing effect. Furthermore, in other embodiments, the cross section of the support part 202 may also be another shape, e.g. trapezoidal, etc.

As shown in fig. 4, in a free state (e.g. when the upper hearth 101 has not been placed on top of the lower hearth 102), the sealing part 201 has a higher height than the support part 202. Since the sealing part 201 has a hollow structure whereas the support part 202 is a solid body, the sealing part 201 undergoes a greater degree of elastic deformation than the support part 202 when the two parts are subjected to the same pressure. When the upper hearth 101 is placed on top of the lower hearth 102, the first upper hearth connection member 107 abuts an upper part of the sealing strip 204. At this time, the support part 202 mainly serves a supporting function, and only undergoes a small amount of compressive deformation in the height direction, whereas the sealing part 201 will undergo significant deformation, with a large amount of compressive deformation in the height direction. Since the support part 202 bears most of the pressure from the upper hearth 101, when the sealing part 201 has deformed to such a degree that the height thereof is the same as the height of the support part 202, the sealing part 201 does not continue to deform. At this time, the top of the sealing part 201 is in tight contact with the lower surface of the first upper hearth connection member 107 as a result of undergoing significant deformation, and mainly serves to perform a sealing function between the first upper hearth connection member 107 and the first lower hearth connection member 108.

When the support part 202 and the sealing part 201 are in a free state, an upper part of the support part 202 and an upper part of the sealing part 201 are separated by a gap 410. The gap 410 can provide space for deformation of the support part 202 and the sealing part 201 (principally the sealing part 201), allowing the upper part of the support part 202 and the upper part of the sealing part 201 to undergo sufficient deformation; mutual interference due to insufficient space for deformation will not occur.

As shown in figs. 3 and 4, the bottom of the sealing part 201 and the bottom of the support part 202 are connected, and together form a base part 343. Two sides in the width direction of the base part 343 are both inward-sloping inclined faces 344; thus, in the width direction, the base part 343 gradually contracts from the bottom upward, such that a cross section of the base part 343 is substantially an isosceles trapezoid.

The mounting seat 203 comprises a bottom plate 341 and two side plates 342; the length directions of the bottom plate 341 and the two side plates 342 are the same. The bottom plate 341 takes the form of a long strip-shaped flat plate; the two side plates 342 are connected to ends at two sides in the width direction of the bottom plate 341 respectively. The two side plates 342 are inclined relative to each other, each forming an acute angle with the bottom plate 341, such that the two side plates 342 and the bottom plate 341 together form an accommodating space 345, a cross section of the accommodating space 345 being substantially an isosceles trapezoid, for the purpose of clamping the base part 343 of the sealing strip 204. In this embodiment, the bottom plate 341 is formed integrally with the two side plates 342; two side edges in the width direction of a long strip-shaped flat plate are separately bent inward to form symmetrical acute angles, and the mounting seat 203 is thereby formed.

In this embodiment, the accommodating space 345 of the mounting seat 203 and the base part 343 of the sealing strip 204 are matched structurally, both having trapezoidal cross sections. With the structurally matched arrangement described above, the elasticity of the sealing strip 204 itself can be utilized to engage the base part 343 of the sealing strip 204 directly in the accommodating space 345 of the mounting seat 203 from above the mounting seat 203, thereby fixing the sealing strip 204 and the mounting seat 203 relative to each other. In other embodiments, the base part 343 of the sealing strip 204 and the accommodating space 345 of the mounting seat 203 may also be designed to have other matching shapes that can be engaged easily.

The side parts of the reflow oven 100 need to be sealed along the entire length thereof, thus the sealing strip 204 must be of the same length as the reflow oven 100. The length of the reflow oven 100 is about 4 m - 8 m; if the mounting seat 203 were to be omitted, and the sealing strip 204 of length 4 m - 8 m were to be directly fixed by bonding with glue to the side part of the reflow oven 100, then the bonding of the sealing strip 204 would be difficult to control due to the long, narrow structure and soft, elastic texture thereof; moreover, the flatness of the sealing strip 204 is difficult to guarantee when bonding with glue is carried out, and upward arching of the sealing strip 204 is likely to result, so that gas leakage occurs.

This embodiment employs the sealing assembly 104 comprising the mounting seat 203 and the sealing strip 204; the mounting seat 203 can be fixed (e.g. welded, or connected by screws or bolts) to the first lower hearth connection member 108 first, and then the sealing strip 204 can be directly engaged in the mounting seat 203 from above the mounting seat 203. That is to say, the base part 343 of the sealing strip 204 can be directly accommodated in the accommodating space 345 of the mounting seat 203 by squeezing deformation, with no need to be fixed by screws or bolts, etc. Since the mounting seat 203 is made of a metal material, is sturdy and not readily deformable, it is able to provide a fixed mounting track for mounting of the sealing strip 204; this not only ensures a suitable mounting position of the sealing strip 204, but also greatly simplifies the steps for mounting the sealing strip 204, enabling rapid mounting of the sealing strip 204. Furthermore, the engagement of the sealing strip 204 in the mounting seat 203 can also facilitate the removal of the sealing strip 204. When it is necessary to replace the sealing strip 204, the sealing strip 204 can be removed from the mounting seat 203 without difficulty by merely applying an upward force to an upper part of the sealing strip 204; this makes renewal and replacement of the sealing strip 204 easy.

In the present application, the mounting seat 203 is added at the bottom of the sealing strip 204, and the mounting seat 203 is fixed at the side part of the reflow oven 100; it is thus possible to achieve quick fitting and quick removal of the sealing strip 204 through the engaged connection of the sealing strip 204 and the mounting seat 203. Furthermore, in the present application, the support part 202 is also added in the sealing strip 204; the support part 202 and the sealing part 201 are arranged side by side, and the support part 202 is mounted at the side close to the hearth of the reflow oven 100. The support part 202 can not only bear pressure acting on the sealing part 201, but also isolate the sealing part 201 from corrosion by flux and heat from inside the reflow oven 100, thereby greatly delaying aging of the sealing strip 204, and extending the life of the sealing strip 204. It must be explained that the sealing assembly 104 of the present application is used in the reflow oven 100, but in other embodiments, the sealing assembly 104 is also suitable for use in other furnaces or containers requiring sealing.

Although only some features of the present application have been shown and described herein, many improvements and changes could be made by those skilled in the art. Thus, it should be understood that the attached claims are delimiting the scope of protection of the present invention.

## Claims

1. A sealing assembly (104) for installation sealing between upper and lower hearths of a reflow oven (100), **characterized in that** the sealing assembly (104) comprises:
a support part (202), the support part (202) taking the form of a long strip;
a sealing part (201), the sealing part (201) being elastic, the sealing part (201) and the support part (202) having the same length directions, the sealing part (201) being located at one side in the width direction of the support part (202) and being connected to the support part (202); and
a mounting seat (203), the support part (202) and the sealing part (201) being removably mounted on the mounting seat (203);
and wherein the bottom of the sealing part (201) and the bottom of the support part (202) are connected, and together form a base part (343).

2. The sealing assembly as claimed in claim 1, **characterized in that**:
the mounting seat (203) is mounted on a side edge mounting part (135) in the length direction of an upper hearth (101) or a lower hearth (102).

3. The sealing assembly as claimed in claim 2, **characterized in that**:
the side edge mounting part (135) is a platform extending outward from a side edge of the upper hearth (101) or the lower hearth (102).

4. The sealing assembly as claimed in claim 1, **characterized in that**:
the support part (202) is a solid body.

5. The sealing assembly as claimed in claim 1, **characterized in that**:
the support part (202) and the sealing part (201) are both made of an elastic material, and the mounting seat (203) is made of a metal material.

6. The sealing assembly as claimed in claim 1, **characterized in that**:
the height of the sealing part (201) is greater than the height of the support part (202).

7. The sealing assembly as claimed in claim 1, **characterized in that**:
when the support part (202) and the sealing part (201) are in a free state, an upper part of the support part (202) and an upper part of the sealing part (201) are separated by a gap.

8. The sealing assembly as claimed in claim 1, **characterized in that**:
the mounting seat (203) comprises a bottom plate (341) and two side plates (342); the length directions of the bottom plate (341) and the two side plates (342) are the same; the two side plates (342) are connected to two sides in the width direction of the bottom plate (341) respectively, and the two side plates (342) are inclined relative to each other, such that the two side plates (342) and the bottom plate (341) together form an accommodating space (345).

9. The sealing assembly as claimed in claim 8, **characterized in that**:
two sides of a base part (343) formed jointly by the sealing part (201) and the support part (202) each have an inward-sloping inclined face (344), and the base part (343) is thereby engageable with the accommodating space (345).

10. The sealing assembly as claimed in claim 1, **characterized in that**:
the sealing part (201) has a hollow structure, and any cross section of the sealing part (201) is annular.

11. The sealing assembly as claimed in claim 1, **characterized in that**:
multiple ribs (301) are provided in a spaced-apart fashion at the top of the sealing part (201), each rib (301) of the multiple ribs (301) extending in the length direction of the sealing part (201).

12. A reflow oven (100), **characterized in that** the reflow oven (100) comprises:
an upper hearth (101), the upper hearth (101) comprising two upper side edges which are opposite each other and extend in the length direction of the upper hearth (101);
a lower hearth (102), the lower hearth (102) comprising two lower side edges which are opposite each other and extend in the length direction of the lower hearth (102);
a first sealing assembly and a second sealing assembly, wherein the first sealing assembly or second sealing assembly is the sealing assembly (104) as claimed in any one of the preceding claims, and the first sealing assembly and the second sealing assembly are each mounted between the corresponding upper side edge and the corresponding lower side edge in the length direction of the upper hearth (101).

13. The reflow oven as claimed in claim 12, **characterized in that**:
the mounting seat (203) of the first sealing assembly and the mounting seat (203) of the second sealing assembly are connected in a fixed manner to the two lower side edges of the lower hearth (102) respectively.

14. The reflow oven as claimed in claim 13, **characterized in that**:
the mounting seat (203) of the first sealing assembly and the mounting seat (203) of the second sealing assembly are fixed to the two lower side edges of the lower hearth (102) by screws or bolts.

## Patentansprüche

1. Dichtungsanordnung (104) zur Installation einer Dichtung zwischen oberen und unteren Herden eines Reflow-Ofens (100), **dadurch gekennzeichnet, dass** die Dichtungsanordnung (104) aufweist:
einen Stützteil (202), wobei der Stützteil (202) die Form eines langen Streifens aufweist;
einen Dichtungsteil (201), wobei der Dichtungsteil (201) elastisch ist, wobei der Dichtungsteil (201) und der Stützteil (202) die gleichen Längsrichtungen aufweisen, wobei der Dichtungsteil (201) auf einer Seite in der Breitenrichtung des Stützteils (202) angeordnet ist und mit dem Stützteil (202) verbunden ist; und
einen Montagesitz (203), wobei der Stützteil (202) und der Dichtungsteil (201) abnehmbar an dem Montagesitz (203) angebracht sind;
und wobei der Boden des Dichtungsteils (201) und der Boden des Stützteils (202) verbunden sind und zusammen einen Basisteil (343) bilden.

2. Dichtungsanordnung nach Anspruch 1, **dadurch gekennzeichnet, dass**:
der Montagesitz (203) an einem Seitenkanten-Montageteil (135) in der Längsrichtung eines oberen Herds (101) oder eines unteren Herds (102) angebracht ist.

3. Dichtungsanordnung nach Anspruch 2, **dadurch gekennzeichnet, dass**:
der Seitenkanten-Montageteil (135) eine Plattform ist, die sich von einer Seitenkante des oberen Herds (101) oder des unteren Herds (102) nach außen erstreckt.

4. Dichtungsanordnung nach Anspruch 1, **dadurch gekennzeichnet, dass**:
der Stützteil (202) ein fester Körper ist.

5. Dichtungsanordnung nach Anspruch 1, **dadurch gekennzeichnet, dass**:
der Stützteil (202) und der Dichtungsteil (201) beide aus einem elastischen Material hergestellt sind, und der Montagesitz (203) aus einem metallischen Material hergestellt ist.

6. Dichtungsanordnung nach Anspruch 1, **dadurch gekennzeichnet, dass**:
die Höhe des Dichtungsteils (201) größer als die Höhe des Stützteils (202) ist.

7. Dichtungsanordnung nach Anspruch 1, **dadurch gekennzeichnet, dass**:
wenn sich der Stützteil (202) und der Dichtungsteil (201) in einem freien Zustand befinden, ein oberer Teil des Stützteils (202) und ein oberer Teil des Dichtungsteils (201) durch einen Spalt getrennt sind.

8. Dichtungsanordnung nach Anspruch 1, **dadurch gekennzeichnet, dass**:
der Montagesitz (203) eine Bodenplatte (341) und zwei Seitenplatten (342) aufweist; die Längsrichtungen der Bodenplatte (341) und der zwei Seitenplatten (342) gleich sind; die zwei Seitenplatten (342) jeweils mit zwei Seiten in der Breitenrichtung der Bodenplatte (341) verbunden sind und die zwei Seitenplatten (342) derart zueinander geneigt sind, dass die zwei Seitenplatten (342) und die Bodenplatte (341) zusammen einen Aufnahmeraum (345) bilden.

9. Dichtungsanordnung nach Anspruch 8, **dadurch gekennzeichnet, dass**:
zwei Seiten eines Basisteils (343), der zusammen von dem Dichtungsteil (201) und dem Stützteil (202) gebildet wird, jeweils eine nach innen geneigte Schrägfläche (344) aufweisen, und der Basisteil (343) dadurch mit dem Aufnahmeraum (345) in Eingriff bringbar ist.

10. Dichtungsanordnung nach Anspruch 1, **dadurch gekennzeichnet, dass**:
der Dichtungsteil (201) eine hohle Struktur aufweist und jeder Querschnitt des Dichtungsteils (201) ringförmig ist.

11. Dichtungsanordnung nach Anspruch 1, **dadurch gekennzeichnet, dass**:
an der Oberseite des Dichtungsteils (201) mehrere Rippen (301) in beabstandeter Weise vorgesehen sind, wobei sich jede Rippe (301) der mehreren Rippen (301) in der Längsrichtung des Dichtungsteils (201) erstreckt.

12. Reflow-Ofen (100), **dadurch gekennzeichnet, dass** der Reflow-Ofen (100) aufweist:
einen oberen Herd (101), wobei der obere Herd (101) zwei obere Seitenkanten aufweist, die entgegengesetzt zueinander sind und sich in der Längsrichtung des oberen Herds (101) erstrecken;
einen unteren Herd (102), wobei der untere Herd (102) zwei untere Seitenkanten aufweist, die entgegengesetzt zueinander sind und sich in der Längsrichtung des unteren Herds (102) erstrecken;
eine erste Dichtungsanordnung und eine zweite Dichtungsanordnung, wobei die erste Dichtungsanordnung oder die zweite Dichtungsanordnung die Dichtungsanordnung (104) nach einem der vorhergehenden Ansprüche ist, und die erste Dichtungsanordnung und die zweite Dichtungsanordnung jeweils zwischen der entsprechenden oberen Seitenkante und der entsprechenden unteren Seitenkante in der Längsrichtung des oberen Herdes (101) angebracht sind.

13. Reflow-Ofen nach Anspruch 12, **dadurch gekennzeichnet, dass**:
der Montagesitz (203) der ersten Dichtungsanordnung und der Montagesitz (203) der zweiten Dichtungsanordnung jeweils in einer festen Weise mit den zwei unteren Seitenkanten des unteren Herds (102) verbunden sind.

14. Reflow-Ofen nach Anspruch 13, **dadurch gekennzeichnet, dass**:
der Montagesitz (203) der ersten Dichtungsanordnung und der Montagesitz (203) der zweiten Dichtungsanordnung durch Schrauben oder Schraubbolzen an den zwei unteren Seitenkanten des unteren Herds (102) befestigt sind.

## Revendications

1. Ensemble d'étanchéité (104) pour une installation d'étanchéité entre les soles supérieure et inférieure d'un four de refusion (100), **caractérisé en ce que** l'ensemble d'étanchéité (104) comprend :
une partie de support (202), la partie de support (202) prenant la forme d'une bande longue ;
une partie d'étanchéité (201), la partie d'étanchéité (201) étant élastique, la partie d'étanchéité (201) et la partie de support (202) ayant les mêmes sens de la longueur, la partie d'étanchéité (201) étant située sur un côté dans le sens de la largeur de la partie de support (202) et étant reliée à la partie de support (202) ; et
un siège de montage (203), la partie de support (202) et la partie d'étanchéité (201) étant montées de manière amovible sur le siège de montage (203) ;
et dans lequel le fond de la partie d'étanchéité (201) et le fond de la partie de support (202) sont reliés, et forment ensemble une partie de base (343).

2. Ensemble d'étanchéité selon la revendication 1, **caractérisé en ce que** :
le siège de montage (203) est monté sur une partie de montage de bord latéral (135) dans le sens de la longueur d'une sole supérieure (101) ou d'une sole inférieure (102).

3. Ensemble d'étanchéité selon la revendication 2, **caractérisé en ce que** :
la partie de montage de bord latéral (135) est une plateforme s'étendant vers l'extérieur à partir d'un bord latéral de la sole supérieure (101) ou de la sole inférieure (102).

4. Ensemble d'étanchéité selon la revendication 1, **caractérisé en ce que** :
la partie de support (202) est un corps solide.

5. Ensemble d'étanchéité selon la revendication 1, **caractérisé en ce que** :
la partie de support (202) et la partie d'étanchéité (201) sont toutes les deux faites d'un matériau élastique, et le siège de montage (203) est fait d'un matériau métallique.

6. Ensemble d'étanchéité selon la revendication 1, **caractérisé en ce que** :
la hauteur de la partie d'étanchéité (201) est supérieure à la hauteur de la partie de support (202).

7. Ensemble d'étanchéité selon la revendication 1, **caractérisé en ce que** :
lorsque la partie de support (202) et la partie d'étanchéité (201) sont dans un état libre, une partie supérieure de la partie de support (202) et une partie supérieure de la partie d'étanchéité (201) sont séparées par un espace.

8. Ensemble d'étanchéité selon la revendication 1, **caractérisé en ce que** :
le siège de montage (203) comprend une plaque inférieure (341) et deux plaques latérales (342) ; les sens de la longueur de la plaque inférieure (341) et des deux plaques latérales (342) sont les mêmes ; les deux plaques latérales (342) sont reliées aux deux côtés dans le sens de la largeur de la plaque inférieure (341) respectivement, et les deux plaques latérales (342) sont inclinées l'une par rapport à l'autre, de sorte que les deux plaques latérales (342) et la plaque inférieure (341) forment ensemble un espace de logement (345).

9. Ensemble d'étanchéité selon la revendication 8, **caractérisé en ce que** :
deux côtés d'une partie de base (343) formée conjointement par la partie d'étanchéité (201) et la partie de support (202) ont chacune une face inclinée vers l'intérieur (344), et la partie de base (343) peut ainsi s'engager avec l'espace de logement (345).

10. Ensemble d'étanchéité selon la revendication 1, **caractérisé en ce que** :
la partie d'étanchéité (201) a une structure creuse, et toute section transversale de la partie d'étanchéité (201) est annulaire.

11. Ensemble d'étanchéité selon la revendication 1, **caractérisé en ce que** :
de multiples nervures (301) sont fournies de manière espacée au sommet de la partie d'étanchéité (201), chaque nervure (301) parmi les multiples nervures (301) s'étendant dans le sens de la longueur de la partie d'étanchéité (201).

12. Four de refusion (100), **caractérisé en ce que** ledit four de refusion (100) comprend :
une sole supérieure (101), la sole supérieure (101) comprenant deux bords latéraux supérieurs qui sont opposés l'un à l'autre et s'étendent dans le sens de la longueur de la sole supérieure (101) ;
une sole inférieure (102), la sole inférieure (102) comprenant deux bords latéraux inférieurs qui sont opposés l'un à l'autre et s'étendent dans le sens de la longueur de la sole inférieure (102) ;
un premier ensemble d'étanchéité et un deuxième ensemble d'étanchéité, dans lesquels le premier ensemble d'étanchéité ou le deuxième ensemble d'étanchéité est l'ensemble d'étanchéité (104) selon l'une quelconque des revendications précédentes, et le premier ensemble d'étanchéité et le deuxième ensemble d'étanchéité sont chacun montés entre le bord latéral supérieur correspondant et le bord latéral inférieur correspondant dans le sens de la longueur de la sole supérieure (101).

13. Four de refusion selon la revendication 12, **caractérisé en ce que** :
le siège de montage (203) du premier ensemble d'étanchéité et le siège de montage (203) du deuxième ensemble d'étanchéité sont reliés de manière fixe aux deux bords latéraux inférieurs de la sole inférieure (102) respectivement.

14. Four de refusion selon la revendication 13, **caractérisé en ce que** :
le siège de montage (203) du premier ensemble d'étanchéité et le siège de montage (203) du deuxième ensemble d'étanchéité sont fixés aux deux bords latéraux inférieurs de la sole inférieure (102) par des vis ou des boulons.
